# EUROPEAN PATENT APPLICATION

(11) **EP 4 730 472 A1**
(43) Date of publication of application: **22.04.2026**
(21) Application number: 24822856.1
(22) Date of filing: 17.06.2024
(51) Int. Cl.: H01M 10/0585, H01M 10/052

(54) **STACKING JELLYROLL, STACKING METHOD THEREFOR, AND BATTERY**

(30) Priority: 16.06.2023 CN 202321554850 U
(71) Applicant: Eve Power Co., Ltd., Jingmen, Hubei 448000 (CN)
(72) Inventor: SHU, Kuanjin, Jingmen, Hubei 448000 (CN); HE, Xiaowu, Jingmen, Hubei 448000 (CN); DUAN, Dong, Jingmen, Hubei 448000 (CN); LIU, Ziwen, Jingmen, Hubei 448000 (CN); YUAN, Dingding, Jingmen, Hubei 448000 (CN); HE, Wei, Jingmen, Hubei 448000 (CN)
(74) Representative: Nederlandsch Octrooibureau
(86) International application number: PCT/CN2024/099674
(87) International publication number: WO 2024/255911

(57) **Abstract**

Provided are a core cell stack assembly and a stacking method therefor, and a battery. The core cell stack assembly includes a positive electrode sheet, a negative electrode sheet, and a separator located between the positive electrode sheet and the negative electrode sheet in a thickness direction of the core cell stack assembly. An edge of the separator is flush with an edge of the negative electrode sheet and extends beyond an edge of the positive electrode sheet on at least one end of each of the positive electrode sheet, the negative electrode sheet, and the separator.

## Description

This application claims priority to Chinese patent application No. 202321554850.7, filed with China National Intellectual Property Administration on June 16, 2023, the entire contents of which are incorporated herein by reference.

### FIELD

The present disclosure relates to the field of lithium battery technologies, and more particularly, to a core cell stack assembly and a battery.

### BACKGROUND

Current core cell manufacturing processes for prismatic batteries include a winding process and a stacking process. Compared with the core cell manufactured using the winding process, the core cell manufactured using the stacking process has greater advantages in structural stability, space utilization, and other aspects.

### SUMMARY

However, a stacking process still has significant drawbacks. For example, in the related art, an electrode sheet is pre-assembled with a separator into a composite sheet, which is then wound to form a core cell. The stacking process has extremely high positioning requirements for the composite sheet, which often leads to overhang dimension defects and increases manufacturing difficulty.

According to an embodiment of the present disclosure, a core cell stack assembly is provided. In a thickness direction of the core cell stack assembly, the core cell stack assembly includes a positive electrode sheet, a negative electrode sheet, and a separator located between the positive electrode sheet and the negative electrode sheet. On at least one end of the positive electrode sheet, the negative electrode sheet, and the separator, an edge of the separator is flush with an edge of the negative electrode sheet and extends beyond an edge of the positive electrode sheet.

According to an embodiment of the present disclosure, a battery is provided. The battery includes an electrolyte, a case, and the above core cell stack assembly. The case is configured to encapsulate the core cell stack assembly and the electrolyte.

According to an embodiment of the present disclosure, a stacking method for a core cell stack assembly is provided. The stacking method includes: placing two layers of separators at two opposite sides of a negative electrode sheet, respectively, where an edge of each of the two layers of separators is flush with an edge of the negative electrode sheet; preparing a positive electrode sheet by cutting a positive electrode sheet roll; placing the positive electrode sheet at a side of one of the two layers of separators, where an edge of the one of the two layers of separators extends beyond an edge of the positive electrode sheet, and the positive electrode sheet, the two layers of separators, and the negative electrode sheet constitute one stack unit; repeatedly preparing a plurality of stack units; and stacking the plurality of stack units using a stacking fixture to complete stacking of the core cell stack assembly.

The advantageous Effects are as follows.

In the embodiments of the present disclosure, the core cell stack assembly includes a core cell. The core cell stack assembly includes the positive electrode sheet, the negative electrode sheet, and the separator located between the positive electrode sheet and the negative electrode sheet in the thickness direction of the core cell stack assembly. By pre-combining and then cutting off the negative electrode sheet and the separator and performing cutting, the edge of the separator is made flush with the edge of the negative electrode sheet, eliminating a need to control an overhang dimension between the separator and the negative electrode sheet. In a process of combining the positive electrode sheet with the negative electrode sheet, an overhang dimension between the separator and the positive electrode sheet is controlled, in such a manner that the edge of the separator extends beyond the edge of the positive electrode sheet. In a stacking process, the stacking fixture is used to clamp stacked electrode sheets, eliminating a need to control the overhang dimension between the separator and the positive electrode sheet. In this way, high-precision control and high-efficiency stacking can be realized, which helps improve positioning accuracy of the electrode sheets and avoids the overhang dimension defects.

### BRIEF DESCRIPTION OF THE DRAWINGS

FIG. 1 is a schematic front view of a core cell stack assembly according to an embodiment of the present disclosure.
FIG. 2 is a schematic left view of a core cell stack assembly according to an embodiment of the present disclosure.
FIG. 3 is a schematic structural view of a stack unit according to an embodiment of the present disclosure.
FIG. 4 is a schematic flow diagram illustrating step S1 to step S3 of a stacking method for a core cell stack assembly according to an embodiment of the present disclosure.
FIG. 5 is another schematic flow diagram illustrating step S1 to step S3 of a stacking method for a core cell stack assembly according to an embodiment of the present disclosure.
FIG. 6 is a schematic flow diagram illustrating step S5 and step S6 of a stacking method for a core cell stack assembly according to an embodiment of the present disclosure.

### DETAILED DESCRIPTION

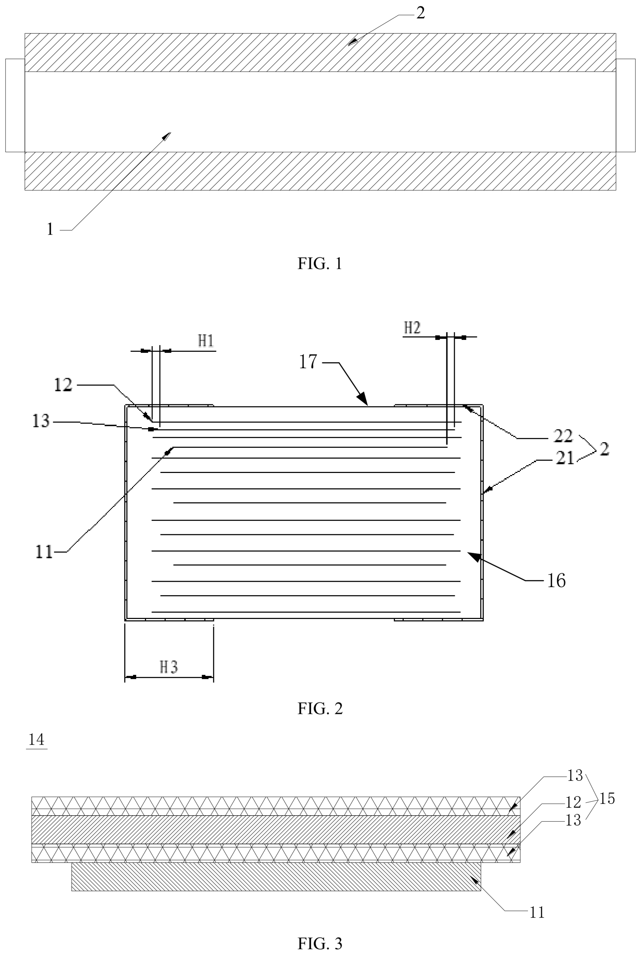

As illustrated in FIG. 1 and FIG. 2, according to an embodiment of the present disclosure, a core cell stack assembly is provided. The core cell stack assembly 1 includes a positive electrode sheet 11, a negative electrode sheet 12, and a separator 13 located between the positive electrode sheet 11 and the negative electrode sheet 12 in a thickness direction of the core cell stack assembly. On at least one end of the positive electrode sheet 11, the negative electrode sheet 12, and the separator 13, an edge of the separator 13 is flush with an edge of the negative electrode sheet 12 and extends beyond an edge of the positive electrode sheet 11.

It should be understood that, with the core cell stack assembly 1 according to the embodiment of the present disclosure, by pre-combining and then cutting off the negative electrode sheet 12 and the separator 13, the edge of the separator 13 is made flush with the edge of the negative electrode sheet 12, eliminating a need to control an overhang dimension H1 between the separator 13 and the negative electrode sheet 12. In a process of combining the positive electrode sheet 11 with the negative electrode sheet 12, an overhang dimension H2 between the separator 13 and the positive electrode sheet 11 is controlled, in such a manner that the edge of the separator 13 extends beyond the edge of the positive electrode sheet 11. In a stacking process, a stacking fixture 3 is used to clamp stacked electrode sheets, eliminating a need to control the overhang dimension H2 between the separator 13 and the positive electrode sheet 11. In this way, high-precision control and high-efficiency stacking can be realized, which helps improve positioning accuracy of the electrode sheets and avoids the overhang dimension defects.

In an embodiment, as illustrated in FIG. 3, the core cell stack assembly 1 includes a plurality of stack units 14 that are stacked. Each stack unit 14 includes the positive electrode sheet 11 and a negative electrode-separator composite sheet 15. The negative electrode-separator composite sheet 15 includes the negative electrode sheet 12 and two layers of separators 13 located at two opposite sides of the negative electrode sheet 12. A first layer the two layers of separators 13 is located between the positive electrode sheet 11 and the negative electrode sheet 12. A second layer of the two layers of separators 13 is located between the negative electrode sheet 12 and a positive electrode sheet 11 of an adjacent stack unit 14.

With the core cell stack assembly according to the embodiment of the present disclosure, surfaces of the two opposite sides of the negative electrode sheet 12 are respectively adhered to the two layers of separators 13 to form the negative electrode-separator composite sheet 15. Then, the positive electrode sheet 11 is combined with the negative electrode-separator composite sheet 15 to form one stack unit 14. With the stack unit 14 serving as a basic unit, the core cell stack assembly 1 is formed by stacking the plurality of stack units 14. That is, the negative electrode sheet 12 is continuously combined with the two layers of separators 13 to form the negative electrode-separator composite sheet 15, and the positive electrode sheet 11 is intermittently combined sheet by sheet with the negative electrode-separator composite sheet 15. A basic structure of the formed stack unit 14 is: separator 13-negative electrode sheet 12-separator 13-positive electrode sheet 11.

It should be understood that, in the embodiment of the present disclosure, since the positive electrode sheet 11, after being cut into individual pieces, is directly positioned onto the first layer of the two layers of separators 13 of the negative electrode-separator composite sheet 15, eliminating a need to adhere the positive electrode sheet 11 to the separator 13, a quantity of transfers of the negative electrode sheet 12 and the separator 13 is reduced, which helps lower a risk of folding of the electrode sheet and folding of the separator 13, significantly improving a battery manufacturing efficiency and reducing battery manufacturing costs.

In an embodiment, the edge of each of the two layers of separators 13 extends beyond the edge of the positive electrode sheet 11 by a dimension greater than 0.1 mm and less than 5 mm.

The edge of the separator 13 extends beyond the edge of the positive electrode sheet 11 by a dimension greater than 1 mm and less than 3 mm.

In an embodiment, as illustrated in FIG. 2, the core cell stack assembly 1 further includes an insulation layer 2. The insulation layer 2 covers at least two side surfaces of the core cell stack assembly 1 to enhance electronic insulation performance and ionic insulation performance between the core cell stack assembly 1 and the case, improving corrosion resistance of the case.

In an embodiment of the present disclosure, the core cell stack assembly 1 is prismatic. The core cell stack assembly 1 includes a first side surface 16 and a second side surface 17 that are perpendicular to each other. The first side surface 16 is formed by the end of the positive electrode sheet 11, the end of the separator 13, and the end of the negative electrode sheet 12, and is parallel to a stacking direction of the stack units 14. The second side surface 17 is parallel to a planar direction of each of the positive electrode sheet 11, the separator 13, and the negative electrode sheet 12, and is perpendicular to the first side surface 16.

Correspondingly, the insulation layer 2 includes a first insulation portion 21 and a second insulation portion 22 that are integrally formed. The first insulation portion 21 covers the first side surface 16. The second insulation portion 22 is formed by bending the first insulation portion 21 inwards and covers at least part of the second side surface 17.

In the thickness direction of the core cell stack assembly 1, a region of the core cell stack assembly 1 covered by the insulation layer 2 has a dimension H3 greater than 3 mm and smaller than a thickness of the core cell stack assembly 1. That is, a region of the second side surface 17 covered by the second insulation portion 22 has a dimension greater than 3 mm and less than a length of the second side surface 17.

Optionally, the insulation layer 2 includes an insulation tape.

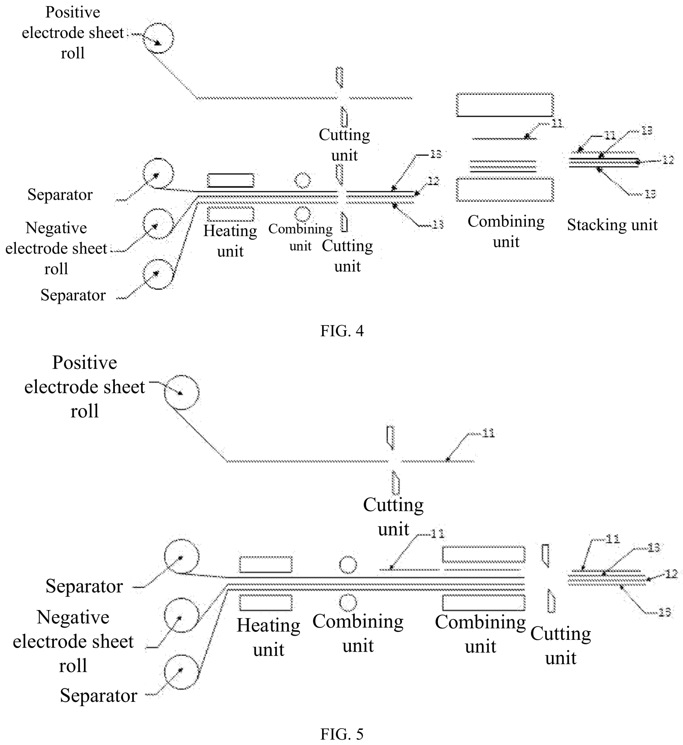

As illustrated in FIG. 4 to FIG. 6, according to an embodiment of the present disclosure, a stacking method for a core cell stack assembly is further provided. The stacking method includes the following steps.

In S1, two layers of separators 13 are placed at two opposite sides of a negative electrode sheet 12, respectively. An edge of each of the two layers of separators 13 is flush with an edge of the negative electrode sheet 12.

In S2, a positive electrode sheet 11 is prepared by cutting a positive electrode sheet coil.

In S3, the positive electrode sheet 11 is placed at a side of one of the two layers of separators 13. An edge of the one of the two layers of separators 13 extends beyond an edge of the positive electrode sheet 11. The positive electrode sheet 11, the two layers of separators 13, and the negative electrode sheet 12 constitute one stack unit 14.

In S4, step S1 to step S3 are repeated to manufacture a plurality of stack units 14.

In S5, the plurality of stack units 14 are stacked using a stacking fixture 3 to complete stacking of the core cell stack assembly 1.

In S6, at least two side surfaces of the core cell stack assembly 1 are covered with an insulation layer 2.

It should be understood that, in the embodiment of the present disclosure, the negative electrode sheet 12 is pre-combined with the separator 13 and cutting is performed, in such a manner that the edge of the separator 13 is made flush with the edge of the negative electrode sheet 12, eliminating the need to control the overhang dimension H1 between the separator 13 and the negative electrode sheet 12. In the process of combining the positive electrode sheet 11 with the negative electrode sheet 12, the overhang dimension H2 between the separator 13 and the positive electrode sheet 11 is controlled, in such a manner that the edge of the separator 13 extends beyond the edge of the positive electrode sheet 11. In the stacking process, the stacking fixture 3 is used to clamp the stacked electrode sheets, eliminating the need to control the overhang dimension H2 between the separator 13 and the positive electrode sheet 11. In this way, high-precision control and high-efficiency stacking can be realized, which helps improve positioning accuracy of the electrode sheets and avoids the overhang dimension defects.

In the step S2, the positive electrode sheet coil is cut by a cutting unit to form the positive electrode sheet 11 having a desired dimension.

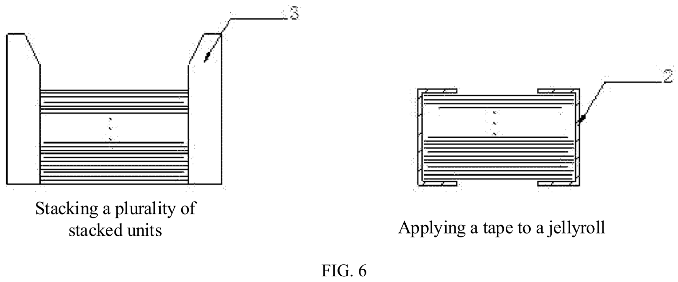

In the step S5, as illustrated in FIG. 6, the stacking fixture 3 may be a robotic hand that grips the stack units 14 in batches for stacking. In an embodiment of the present disclosure, the robotic hand has a gripping width equal to a width of the negative electrode sheet 12.

In an embodiment, as illustrated in FIG. 4, subsequent to formation of the negative electrode-separator composite sheet 15, the negative electrode-separator composite sheet 15 is cut and then combined with the positive electrode sheet 11 to form one stack unit 14. Subsequently, the plurality of stack units 14 are stacked, and a tape is applied.

In the step S1, the two layers of separators 13 are placed at two opposite sides of a negative electrode sheet coil, respectively, to form a negative electrode-separator composite sheet 15, and the negative electrode-separator composite sheet 15 is cut. In the step S3, the cut negative electrode-separator composite sheet 15 and the positive electrode sheet 11 are stacked to form the stack unit 14.

In the step S1, the negative electrode sheet coil and the two layers of separators 13 pass through a hot pressing roller together, causing the negative electrode sheet 12 to be adhered and fixed to the separator 13. The hot pressing roller applies heat during pressing. According to the embodiment, a heating unit is further provided, which is configured to heat the negative electrode sheet coil and the separator 13. Of course, flat roller pressing, patterned roller pressing, or smooth roller pressing may also be used. The present disclosure is not limited in this regard.

In an embodiment, as illustrated in FIG. 5, subsequent to the formation of the negative electrode-separator composite sheet 15, the positive electrode sheet 11 is combined with the negative electrode-separator composite sheet 15, and then the combined structure is cut to form one stack unit 14. Subsequently, the plurality of stack units 14 are stacked, and the tape is applied.

In the step S1, the two layers of separators 13 are placed at the two opposite sides of the negative electrode sheet coil, respectively, to form the negative electrode-separator composite sheet 15. In the step S3, the negative electrode-separator composite sheet 15 is stacked with the positive electrode sheet 11, and cutting is performed to form the stack unit 14.

According to an embodiment of the present disclosure, a battery is further provided. The battery includes an electrolyte, a case, and the core cell stack assembly 1. The case is configured to encapsulate the core cell stack assembly 1 and the electrolyte.

In an embodiment of the present disclosure, the battery is a prismatic battery.

The following advantageous effects are provided. In the embodiments of the present disclosure, the core cell stack assembly includes the core cell. The core cell stack assembly includes the positive electrode sheet, the negative electrode sheet, and the separator located between the positive electrode sheet and the negative electrode sheet in the thickness direction of the core cell stack assembly. By pre-combining the negative electrode sheet with the separator and performing cutting, the edge of the separator is made flush with the edge of the negative electrode sheet, eliminating the need to control the overhang dimension between the separator and the negative electrode sheet. In the process of combining the positive electrode sheet with the negative electrode sheet, the overhang dimension between the separator and the positive electrode sheet is controlled, in such a manner that the edge of the separator extends beyond the edge of the positive electrode sheet. In the stacking process, the stacking fixture is used to clamp the stacked electrode sheets, eliminating the need to control the overhang dimension between the separator and the positive electrode sheet. In this way, high-precision control and high-efficiency stacking can be realized, which helps improve positioning accuracy of the electrode sheets and avoids the overhang dimension defects.

## Claims

1. A core cell stack assembly (1), comprising, in a thickness direction of the core cell stack assembly (1):
a positive electrode sheet (11);
a negative electrode sheet (12); and
a separator (13) located between the positive electrode sheet (11) and the negative electrode sheet (12),
wherein on at least one end of the positive electrode sheet (11), the negative electrode sheet (12), and the separator (13), an edge of the separator (13) is flush with an edge of the negative electrode sheet (12) and extends beyond an edge of the positive electrode sheet (11).

2. The core cell stack assembly (1) according to claim 1, comprising a plurality of stack units (14) that are stacked, wherein each of the plurality of stack units (14) comprises the positive electrode sheet (11) and a negative electrode-separator composite sheet (15), the negative electrode-separator composite sheet (15) comprising the negative electrode sheet (12) and two layers of separators (13) located at two opposite sides of the negative electrode sheet (12), wherein:
a first layer of the two layers of separators (13) is located between the positive electrode sheet (11) and the negative electrode sheet (12); and
a second layer of the two layers of separators (13) is located between the negative electrode sheet (12) and a positive electrode sheet (11) of an adjacent stack unit (14).

3. The core cell stack assembly (1) according to claim 2, wherein the edge of each of the two layers of separators (13) extends beyond the edge of the positive electrode sheet (11) by a dimension greater than 0.1 mm and less than 5 mm.

4. The core cell stack assembly (1) according to claim 3, wherein the edge of each of the two layers of separators (13) extends beyond the edge of the positive electrode sheet (11) by a dimension greater than 1 mm and less than 3 mm.

5. The core cell stack assembly (1) according to any one of claims 1 to 4, further comprising an insulation layer (2) covering at least two side surfaces of the core cell stack assembly (1).

6. The core cell stack assembly (1) according to claim 5, wherein in the thickness direction of the core cell stack assembly (1), a region of the core cell stack assembly (1) covered by the insulation layer (2) has a dimension greater than 3 mm.

7. The core cell stack assembly (1) according to claim 5, wherein in the thickness direction of the core cell stack assembly (1), a region of the core cell stack assembly (1) covered by the insulation layer (2) has a dimension smaller than a thickness of the core cell stack assembly (1).

8. The core cell stack assembly (1) according to claim 5, wherein the insulation layer (2) comprises an insulation tape.

9. A battery, comprising:
an electrolyte;
a case; and
the core cell stack assembly (1) according to any one of claims 1 to 8, wherein the case is configured to encapsulate the core cell stack assembly (1) and the electrolyte.

10. The battery according to claim 9, wherein the battery is a prismatic battery.

11. A stacking method for a core cell stack assembly, the stacking method comprising:
placing two layers of separators (13) at two opposite sides of a negative electrode sheet (12), respectively, wherein an edge of each of the two layers of separators (13) is flush with an edge of the negative electrode sheet (12);
preparing a positive electrode sheet (11) by cutting a positive electrode sheet coil;
placing the positive electrode sheet (11) at a side of one of the two layers of separators (13), wherein an edge of the one of the two layers of separators (13) extends beyond an edge of the positive electrode sheet (11), and wherein the positive electrode sheet (11), the two layers of separators (13), and the negative electrode sheet (12) constitute one stack unit (14);
repeatedly preparing a plurality of stack units (14); and
stacking the plurality of stack units (14) using a stacking fixture (3) to complete stacking of the core cell stack assembly (1).

12. The stacking method according to claim 11, wherein said placing the two layers of separators (13) at the two opposite sides of the negative electrode sheet (12), respectively comprises:
placing the two layers of separators (13) at two opposite sides of a negative electrode sheet roll, respectively, to form a negative electrode-separator composite sheet (15); and
cutting the negative electrode-separator composite sheet (15), and
wherein said placing the positive electrode sheet (11) at the side of the one of the two layers of separators (13) comprises:
stacking the cut negative electrode-separator composite sheet (15) and the positive electrode sheet (11).

13. The stacking method according to claim 11 or 12, further comprising, subsequent to said stacking the plurality of stack units (14) using the stacking fixture (3):
covering at least two side surfaces of the core cell stack assembly (1) with an insulation layer (2).
